# EUROPEAN PATENT APPLICATION

(11) **EP 1 164 053 A2**
(43) Date of publication of application: **19.12.2001**
(21) Application number: 01305183.4
(22) Date of filing: 14.06.2001
(51) Int. Cl.: B60Q 1/26

(54) **A rear combination signal lamp for motor vehicles**

(30) Priority: 15.06.2000 CZ 20002213
(71) Applicant: AUTOPAL S.R.O., Novy Jicin 741 01 (CZ)
(72) Inventor: Kletensky, Daniel, Rybi 742 65 (CZ); Kubena, Vladimir, Novy Jicin 741 01 (CZ)
(74) Representative: Godwin, Edgar James

(57) **Abstract**

A rear combination signal lamp for motor vehicles compris at least the lighting function of a stop light and that of a rear fog light. The illuminating area of a stop light (4) comprises at least two separated groups (A, B) of active luminous areas (1,2). The first luminous areas (1) of the first group (A) are placed at a distance (x) to illuminating area of a rear fog light (3). The distance (x) complies with the respective regulations applied for lighting of motor vehicles. The second luminous areas (2) of the second group (B) are situated in an arbitrary position with regard to the active illuminating area of the rear fog light (3). Area and brightness of the stop light (4) varies according to current mode of the rear fog light (3).

## Description

### Field of the Invention

The present invention relates to a rear combination signal lamp for motor vehicles comprising at least the lighting function of a stop light and that of a rear fog light. The invention solves the problem of constraints in layout and size of a lamp combining commonly used functions. The respective regulations regarding the minimal distance between the active illuminating area of a stop light and that of a rear fog light are more easily met.

### Background of the Invention

In prior art, the problem of the minimal distance of the active lighting area of a stop light and that of a rear fog light, when they are placed in a combined lamp, is solved by structural separation of the light source compartments. But such a design limits the creative freedom for an aesthetic geometric layout and sizes of the luminous areas, because it is necessary to provide for a distance of at least 100 mm between a rear fog light and a stop light according to the international ECE regulations now in force.

### Summary of the Invention

The existing disadvantage resulting from the necessity to keep the minimal distance between the active luminous areas of a stop light and a rear fog light, which minimal distance is required by the regulations now in force, is substantially solved by this invention by means of a variable illuminating area and variable brightness of a stop light.

A rear combination signal lamp for motor vehicles comprising at least the lighting function of a stop light and that of a rear fog light, according to this invention is so designed that the illuminating area of a stop light comprises at least two separated groups of active luminous areas. The first luminous areas of the first group are placed at a distance x to illuminating area of a rear fog light. The distance x complies with the respective regulations applied for lighting of motor vehicles. The second luminous areas of the second group are situated at an arbitrary position with regard to the active illuminating area of the rear fog light. The condition of the first group of the first areas and that of the second group of the second areas are controllable for each of them individually in such a way that when the rear fog light is not illuminating and the stop light function is active, then, the first luminous areas of the first group and the second areas of the second group of the stop light are illuminating, and when the rear fog light is illuminating and the stop light function is active then only the first luminous area of the first group are illuminating and simultaneously the brightness of the first luminous area of the first group is higher then that in case when the fog light is not illuminating.

Preferably, this rear combination signal lamp is provided with light emitting diodes (LEDs) as the light sources of the stop light.

Preferably, this rear combination signal lamp is provided with a neon tube as the light source of said stop light.

Also, the light source of said stop light can be a bulb filament.

The second luminous areas of the second group are situated arbitrarily with regard to those of the first group or eventually to the active illuminating area of the rear fog light in the lamp. The current modes of operation of both the first areas of the first group and the second areas of the second group are controlled individually for each of them and depend on the current state of the rear fog lamp. The whole light pattern of the lamp then looks so as specified in the following table.

| Mode | Function | | Stop light mode | | Rear fog light mode |
|---|---|---|---|---|---|
| | Stop light | Fog light | Group A | Group B | The whole part |
| I. | Switched off | Switched off | Does not illuminate | Does not illuminate | Does not illuminate |
| II. | Switched on | Switched off | Illuminates | Illuminates | Does not illuminate |
| III. | Switched off | Switched on | Does not illuminate | Does not illuminate | Illuminates |
| IV. | Switched on | Switched on | Illuminates with increased brightness | Does not illuminate | Illuminates |

The brightness of the first luminous areas of the first group of the stop light in the mode IV depends on the ratio of the whole area of the first luminous areas of the first group to the whole area of the luminous areas of both groups so that the total luminous intensity of the stop light is the same both in the mode II and the mode IV.

### Brief Description of the Drawings

The invention in its various aspects will now be described with reference to the attached drawings thereof, in which:

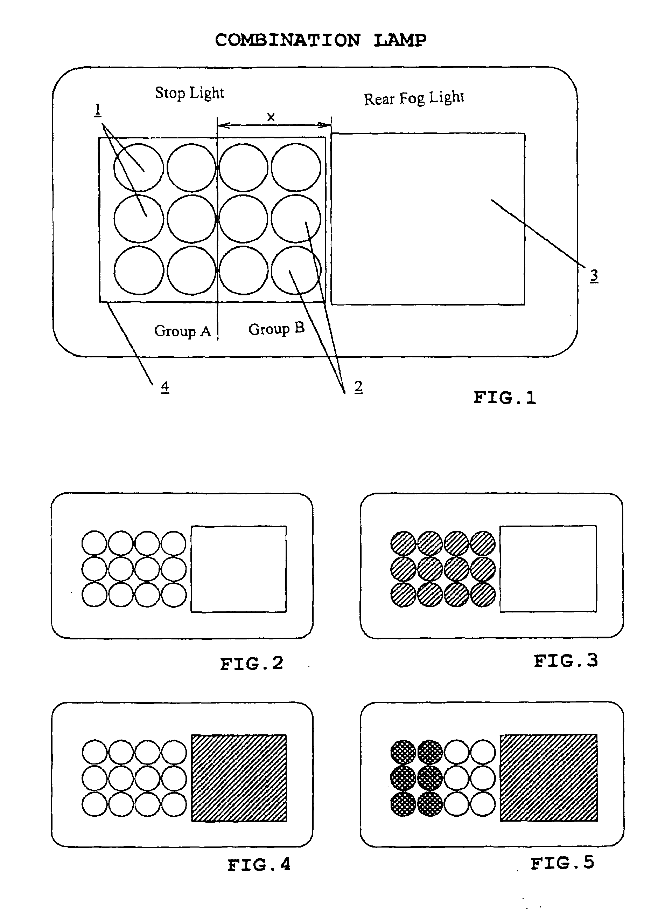

Figure 1 shows a top view of individual luminous areas of a rear combination signal lamp for motor vehicles, whereby the stop light is partitioned into areas of the first group placed by their total surface in prescribed distance x to the surface of a rear fog light and the second areas of the second group placed arbitrarily with regard to the area of a rear fog light;
Figure 2 shows a top view of a situation when none of the functions is in the illuminating mode;
Figure 3 schematically shows a top view of a situation when only the stop light is illuminating;
Figure 4 shows a top view of a situation when only the rear fog light is illuminating;
Figure 5 shows a top view of a situation when the rear fog light and the stop light are illuminating simultaneously. A blank area shown within the contours represents a non-illuminating area, a parallel-line shaded area represents a illuminating area, whereby, a crossed-lines shaded area of the first areas of the first group in Figure 5 represents increased brightness which brightness eliminates a decrease in brightness caused by the non-illuminating second areas of the second group;
Figure 6 shows a schematic top view of a combined lamp.

### Example

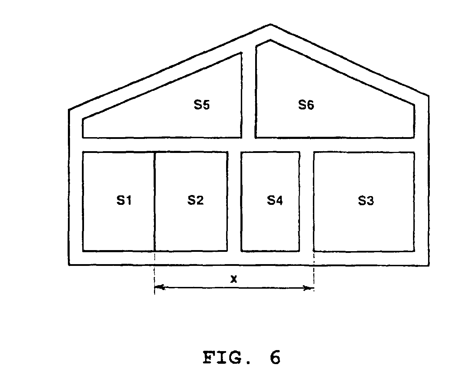

In a particularly preferred embodiment of the present invention, layout of individual functional illuminating areas of a rear combination signal lamp for a passenger motor vehicle is shown as an example. Figure 6 schematically shows an example of the layout of a combination signal lamp according to the invention. As the light sources are used bulbs. The individual areas indicated by reference numerals are, by the way of example, allocated to the following lighting purposes:
- S1: First group A area
- S2: Second group B area
- S3: Rear fog light 3 area
- S4: Tail light area
- S5: Reverse light area
- S6: Turn indicator light area

The first group A area S1 represents the area of the first illuminating areas 1, which first group A is spaced out of the rear fog light 3 area S3 of the fog light 3 at a prescribed distance x. The second group B area S2 represents the second group B of second luminous areas 2 placed arbitrarily with regard to the position of the rear fog light area S3.

In case, the rear fog light area S3 allocated to the rear fog light 3 is not illuminating, the first group A area S1 and the second group B area S2 are used combined for the stop light 4 function. In case, the rear fog light 3 is switched on, only the first group A area S1 is used for the stop light 4 function, which first group A area S1 shines with an increased brightness when compared with the case when the rear fog light 3 is not illuminating. The lights allocated to the remaining functions, i.e. those in the tail light area S4, reverse light area S5, and the turn indicator light area S6 shine, so as they are controlled by vehicle driver, without any regard to the above described cases.

### List of reference signs

- 1: first luminous area
- 2: second luminous area
- 3: rear fog light
- 4: stop light
- A: first group
- B: second group
- S1: first group A area
- S2: second group B area
- S4: tail light area
- S5: reverse light area
- S6: turn indicator light area
- x: distance

## Claims

1. A rear combination signal lamp for motor vehicles comprising at least the lighting function of a stop light and that of a rear fog light, **characterised in that** the illuminating area of a stop light (4) comprises at least two separated groups (A, B) of active luminous areas (1,2), whereby said first luminous areas (1) of said first group (A) are placed at a distance (x) to illuminating area of a rear fog light (3), whereby, said distance (x) complies with the respective regulations applied for lighting of motor vehicles, and said second luminous areas (2) of said second group (B) are situated at an arbitrary position with regard to the active illuminating area of said rear fog light (3), whereby, the condition of said first group (A) of said first areas (1) and that of said second group (B) of said second areas (2) are controllable for each of them individually in such a way that when said rear fog light (3) is not illuminating and said stop light (4) function is active, then both said first luminous areas (1) of said first group (A) and said second areas (2) of said second group (B) of said stop light (4) are illuminating and when said rear fog light (3) is illuminating and said stop light (4) function is active then only said first luminous areas (1) of said first group (A) are illuminating and simultaneously the brightness of said first luminous areas (1) of said first group (A) is higher then that in case when said fog light (3) is not illuminating.

2. A rear combination signal lamp of Claim 1 **characterised in that** the light sources of said stop light (4) are light emitting diodes.

3. A rear combination signal lamp of Claim 1 **characterised in that** the light source of said stop light (4) is a neon tube.

4. A rear combination signal lamp of Claim 1 **characterised in that** the light source of said stop light (4) is filament of a bulb.
